# EUROPÄISCHE PATENTANMELDUNG

(11) **EP 2 775 079 A2**
(43) Veröffentlichungstag der Anmeldung: **10.09.2014**
(21) Anmeldenummer: 14000492.0
(22) Anmeldetag: 12.02.2014
(51) Int. Cl.: E05F 3/22, F16B 4/00, F16B 9/02

(54) **Befestigungselement**

(30) Priorität: 08.03.2013 DE 102013102345
(71) Anmelder: Dorma GmbH & Co. KG, 58256 Ennepetal (DE)
(72) Erfinder: Hellwig, Alexander, D-58256 Ennepetal (DE); Wiemann, Sabine, D-58256 Ennepetal (DE)

(57) **Zusammenfassung**

Die Erfindung betrifft ein Befestigungselement (1), insbesondere zum Befestigen einer Antriebseinheit (8) eines Türbetätigers an einer Montageplatte (9), umfassend ein Basiselement (92), das an der Montageplatte (9) befestigbar ist, zumindest ein Halteelement (2; 20), das an dem Basiselement (92) befestigt ist, und eine Spannvorrichtung (4, 7; 40, 70), mittels der die Antriebseinheit (8) zwischen Basiselement (92) und Halteelement (2; 20) einspannbar ist.

## Beschreibung

Die vorliegende Erfindung betrifft ein Befestigungselement, das insbesondere zum Befestigen einer Antriebseinheit eines Türbetätigers an einer Montageplatte geeignet ist.

Der Stand der Technik kennt verschiedene Bauarten von Türbetätigern, insbesondere Türschließer, Servotürschließer oder Türantriebe. Der Türbetätiger wird entweder direkt am Türblatt oder an der Wand bzw. Zarge befestigt. Befindet sich der Türbetätiger an Wand oder Zarge, so wird eine Abtriebswelle des Türbetätigers über ein Gestänge mit dem Türblatt verbunden. Befindet sich der Türbetätiger direkt am Türblatt, so verbindet das Gestänge die Abtriebswelle mit einer Gleitschiene an Wand oder Zarge. Innerhalb der Türbetätiger wird eine Antriebseinheit verwendet, die die Drehbewegung der Abtriebswelle mittels Kolben in eine lineare Bewegung zum Spannen einer Schließfeder umwandelt. In herkömmlicher Anordnung wird die Antriebseinheit auf eine Montageplatte montiert. Dazu werden zumeist vier Schrauben verwendet, mit denen die Antriebseinheit an der Montageplatte befestigt wird.

Die Befestigung mittels Schrauben erfordert jedoch einen hohen Zeitaufwand und kann gerade beim Ausrichten eines Türbetätigers auf der Montageplatte zeitraubende Montage- und Demontagevorgänge mit sich bringen.

Es ist Aufgabe der vorliegenden Erfindung, einen Türbetätiger bereitzustellen, der bei einfacher und kostengünstiger Herstellung und bei sicherem und wartungsarmem Betätigen der Türe eine einfache und kostengünstige Montage ermöglicht.

Die Lösung dieser Aufgabe erfolgt durch die Merkmale des Anspruchs 1. Die Unteransprüche haben bevorzugte Weiterbildungen der Erfindung zum Gegenstand.

Die Aufgabe wird somit gelöst durch ein Befestigungselement, das insbesondere zum Befestigen einer Antriebseinheit eines Türbetätigers an einer Montageplatte verwendbar ist. Das erfindungsgemäße Befestigungselement umfasst ein Basiselement, zumindest ein Halteelement, und eine Spannvorrichtung. Das Basiselement ist derart eingerichtet, dass dieses an der Montageplatte befestigt werden kann. Bevorzugt kann das Basiselement auch ein Teilbereich der Montageplatte selbst sein. An dem Basiselement befestigt ist das Halteelement. Dabei ist vorgesehen, dass die Antriebseinheit des Türbetätigers derart zwischen Basiselement und Halteelement angebracht werden kann, dass die Spannvorrichtung die Antriebseinheit zwischen Basiselement und Halteelement einspannt. Auf diese Weise ist eine sehr einfache Montage der Antriebseinheit des Türbetätigers an der Montageplatte möglich, da die Antriebseinheit durch die Spannvorrichtung befestigt werden kann. Somit ist es nicht mehr nötig, die Antriebseinheit aufwändig an die Montageplatte anzuschrauben. Bevorzugt ist das Halteelement derart ausgebildet, dass sich dieses vollständig um die Geometrie der Antriebseinheit legt, wodurch ein sicherer und zuverlässiger Halt der Antriebseinheit zwischen Halteelement und Basiselement erreicht wird.

In einer bevorzugten Ausführungsform der Erfindung ist das zumindest eine Halteelement über ein erstes Lager an dem Basiselement gelagert. Besonders bevorzugt ist dabei vorgesehen, dass das erste Lager eine lösbare Verbindung zwischen Halteelement und Basiselement darstellt, so dass das Halteelement zumindest teilweise von dem Basiselement lösbar ist. Auf diese Weise wird die Montage der Antriebseinheit vereinfacht. Alternativ oder zusätzlich ist bevorzugt vorgesehen, dass die Spannvorrichtung über ein weites Lager an dem Basiselement gelagert ist. Weiterhin ist die Spannvorrichtung bevorzugt über ein drittes Lager mit dem zumindest einen Halteelement verbunden. Eine derartige Kinematik ist sehr einfach zu realisieren und ermöglicht so eine einfache und kostengünstige Herstellung des erfindungsgemäßen Befestigungselements.

Bevorzugt ist außerdem vorgesehen, dass die Spannvorrichtung einen Hebel und ein mit dem Hebel starr verbundenes Spannelement umfasst, wobei Spannelement und Halteelement einen Kniehebel bilden. Durch den Kniehebelmechanismus kann eine geringe auf den Hebel aufgebrachte Kraft in eine hohe Kraft umgewandelt werden, die auf das Halteelement wirkt. So ist es möglich, bei geringer Montagekraft des Türbetätigers dennoch eine hohe Einspannkraft zu erzeugen, mit der die Antriebseinheit des Türbetätigers zwischen Halteelement und Basiselement eingespannt wird. Daher kann die Antriebseinheit einfach und kostengünstig, aber dennoch sicher und zuverlässig befestigt werden.

Der durch Spannelement und Halteelement gebildete Kniehebel kann in einer besonders vorteilhaften Ausführung eine Kniehebel-Verrastung bilden. Dazu ist vorteilhaft vorgesehen, dass das erste Lager und das zweite Lager translationsfest sind, während das dritte Lager translatorisch beweglich ist. Dies schafft die Grundlage dafür, dass der aus Spannelement und Halteelement gebildete Kniehebel über seinen Totpunkt hinaus bewegt werden kann, so dass eine Kniehebel-Verrastung möglich ist. Da, wie zuvor beschrieben, der Kniehebelmechanismus bei geringer Montagekraft eine hohe Spannkraft erzeugt, bleibt durch die Kniehebel-Verrastung die Antriebseinheit auch ohne äußeres Einwirken mit der hohen Spannkraft eingespannt. Auf diese Weise wird bevorzugt sichergestellt, dass eine Betätigung von Türen durch die Antriebseinheit des Türbetätigers gefahrlos möglich ist, ohne dass sich die Einspannung der Antriebseinheit selbstständig löst. Bevorzugt kann durch die Kniehebel-Verrastung mindestens eine genauso hohe Anpresskraft der Antriebseinheit an das Basiselement erfolgen, wie dies auch mit einer Verschraubung möglich wäre.

Weiterhin ist besonders vorteilhaft, wenn das Spannelement über das zweite Lager an dem Basiselement gelagert ist. Dazu ist es ebenso besonders vorteilhaft, wenn das Spannelement über das dritte Lager an dem Halteelement gelagert ist. Außerdem ist bevorzugt vorgesehen, dass der Hebel eingerichtet ist, eine Bewegung des Hebels in eine Bewegung des dritten Lagers auf einer bogenförmigen Kurve um das zweite Lager herum umzusetzen. Eine derartige Anordnung bietet eine sehr einfache Umsetzung des Kniehebelprinzips, der zur Befestigung der Antriebseinheit des Türbetätigers an der Montageplatte besonders geeignet ist. Durch Bewegung des Hebels kann das Halteelement derart bewegt werden, dass dieses die Spannkraft, mit der die Antriebseinheit zwischen Halteelement und Basiselement eingespannt ist, entweder vergrößert oder verkleinert.

Zum Realisieren einer Kniehebelverrastung ist außerdem besonders bevorzugt ein Anschlag vorgesehen, mit der eine Bewegung des Hebels in eine vordefinierte Richtung blockiert wird. Dies bedeutet, dass der Anschlag die Gegenkraft aufnimmt, die durch das Einspannen der Antriebseinheit zwischen Halteelement und Basiselement auf das Halteelement, und damit auch auf die Spannvorrichtung und den Hebel wirkt, aufzunehmen.

In einer weiteren vorteilhaften Ausführungsform weist das erfindungsgemäße Befestigungselement ein elastisches Element auf, das insbesondere zwischen Antriebseinheit und Halteelement anordenbar ist. In diesem Fall ist die Spannvorrichtung bevorzugt eingerichtet, das elastische Element durch Aufbringen einer Kraft von dem Halteelement auf die Antriebseinheit zu verformen. Diese Verformung ist insbesondere elastisch. Durch die Verwendung des elastischen Elements strebt der bevorzugt aus Spannelement und Halteelement gebildete Kniehebel naturgemäß zu einem Status größtmöglicher Streckung, bei der Spannelement und Halteelement am dritten Lager einen Winkel von 180° zueinander aufweisen. Wird der Kniehebel bei der Befestigung der Antriebseinheit an der Montageplatte über seinen Totpunkt bewegt, so sinkt zwar die Spannkraft, mit der die Antriebseinheit zwischen Halteelement und Basiselement eingespannt ist, jedoch wirkt die Gegenkraft des elastischen Elements als Verriegelung, da sich der Kniehebelmechanismus naturgemäß weiter von seinem Totpunkt wegbewegt, während für das Lösen der Verspannung ein Bewegen des Kniehebels in Richtung des Totpunkts notwendig ist. Somit wird einerseits ein sicherer Halt der Antriebseinheit ermöglicht, jedoch ebenso eine schnelle und einfache Demontage erlaubt, da der Kniehebelmechanismus lediglich in Richtung seines Totpunkts, beispielsweise durch Aufbringen einer äußeren Kraft, bewegt werden muss.

Besonders vorteilhaft ist das elastische Element derart angeordnet, dass durch die Bewegung des dritten Lagers das elastische Element gegen die Antriebseinheit anpressbar ist. Dabei ist insbesondere vorgesehen, dass sich das elastische Element zumindest in einem Teilbereich direkt um die Geometrie der Antriebseinheit legt. Wird das dritte Lager auf der zuvor beschriebenen bogenförmigen Kurve bewegt, so erreicht dieses an einer Stelle den Totpunkt des zuvor beschriebenen Kniehebels, wobei bevorzugt vorgesehen ist, dass an diesem Totpunkt das elastische Element durch die Anpressung an die Antriebseinheit eine maximale Verformung aufweist. Diese Verformung ist besonders bevorzugt elastisch, so dass an dem Totpunkt eine maximale Gegenkraft des elastischen Elements auf das Halteelement vorhanden ist.

Bevorzugt ist das elastische Element eine Gummihülse, die zumindest in einem Teilbereich um das Halteelement gelegt ist.

Die Erfindung betrifft weiterhin einen Türbetätiger, der eine Antriebseinheit, eine Montageplatte und ein Befestigungselement umfasst. Das verwendete Befestigungselement weist bevorzugt die zuvor genannten Eigenschaften auf. Vorteilhafterweise wird das Befestigungselement dazu verwendet, die Antriebseinheit an der Montageplatte zu befestigen. Wie zuvor beschrieben, erlaubt ein derartiger Türbetätiger eine einfache und schnelle Montage, wobei ein sicherer und zuverlässiger Halt der Antriebseinheit an der Montageplatte gesichert ist.

Besonders vorteilhaft ist der Türbetätiger ausgebildet, wenn das Basiselement einstückig mit der Montageplatte ausgebildet ist. In diesem Fall muss das Basiselement nicht in einem zusätzlichen Schritt an der Montageplatte befestigt werden. Weiterhin werden in dieser bevorzugten Ausführungsform weniger Bauteile benötigt, um den erfindungsgemäßen Türbetätiger zu erhalten. Dies senkt einerseits den Montage-, andererseits den Fertigungsaufwand.

Die Erfindung wird nun anhand eines Ausführungsbeispiels unter Berücksichtigung der beigefügten Zeichnungen näher beschrieben. Dabei zeigen:
- Fig. 1: eine schematische Ansicht des Prinzips eines Kniehebelmechanismus' in linearer Ausführung,
- Fig. 2: eine schematische Ansicht der prinzipiellen Funktionsweise des Befestigungselements gemäß einer Ausführungsform der Erfindung,
- Fig. 3: eine erste schematische Ansicht des Befestigungselements gemäß der Ausführungsform der Erfindung,
- Fig. 4: eine weitere schematische Ansicht des Befestigungselements gemäß der Ausführungsform der Erfindung, und
- Fig. 5: eine schematische Ansicht eines Türbetätigers gemäß einer Ausführungsform der Erfindung.

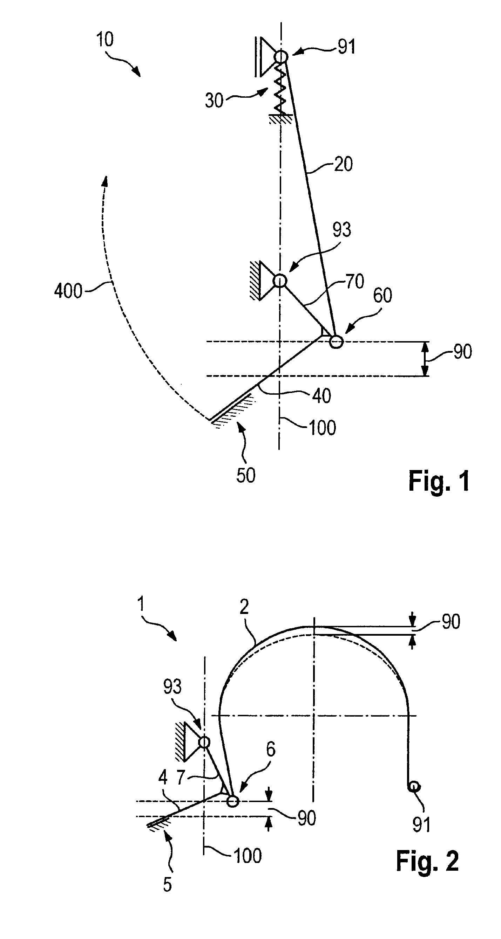

Die Fig. 1 zeigt schematisch das Prinzipbild der Funktionsweise einer Kniehebelverrastung 10. Die Kniehebelverrastung 10 umfasst einen Kniehebel, der sich aus einem Spannelement 70 und einem Halteelement 20 zusammensetzt. Spannelement 70 und Halteelement 20 sind über ein drittes Lager 60 miteinander verbunden. Das dritte Lager 60 lässt Rotationen von Spannelement 70 und Halteelement 20 relativ zueinander zu, während es translatorische Bewegungen vollständig sperrt. Das Halteelement 20 ist außerdem an einem ersten Lager 91 gelagert, das neben einer Rotation auch eine Translation entlang einer ersten Achse 100 ermöglicht. Eine solche Bewegung ist jedoch nur unter Verformung eines elastischen Elements 30 möglich, das derart auf das erste Lager 91 oder auf das Halteelement 20 einwirkt, dass der aus Halteelement 20 und Spannelement 70 gebildete Kniehebel durch die Rückstellkraft des elastischen Elements 30 stets in einen Status der größtmöglichen Streckung gebracht wird.

Ebenfalls auf der ersten Achse 100 angeordnet ist ein zweites Lager 93, wobei das zweite Lager keinerlei Translation zulässt. An dem zweiten Lager 93 ist das Spannelement 70 gelagert. Eine Bewegung der Kniehebelverrastung 10 ist über einen Hebel 40 möglich, der an dem Spannelement 70 starr befestigt ist.

In Figur 1 ist gezeigt, dass der Hebel 40 an einem Anschlag 50 anliegt. Von dem Anschlag 50 ausgehend kann der Hebel 40 entlang einer bogenförmigen Bahn 400 bewegt werden, wobei durch die starre Anbindung des Hebels 40 an dem Spannelement 70 das Spannelement 70 sowie das dritte Lager 60 dieselbe bogenförmige Bahn 400 zurücklegen, wie der Hebel 40. Daher bewegt sich das dritte Lager 60 analog zu der bogenförmig Bahn 400 bogenförmig um das zweite Lager 93. Sobald das dritte Lager 60 die erste Achse 100 schneidet, ist ein Totpunkt der Kniehebelverrastung 10 erreicht. In diesem Fall ist das elastische Element 30 maximal gespannt, da der aus Spannelement 70 und Halteelement 20 gebildete Kniehebel eine minimale Streckung aufweist.

Ausgehend von dem Totpunkt kann das dritte Lager 60 durch Bewegung des Hebels 40 derart gesteuert werden, dass die Kniehebelverrastung 10 verrastet oder geöffnet wird. Wird der Hebel 40 entlang der bogenförmig Bahn 400 vom Anschlag 50 wegbewegt, so kann der aus Spannelement 70 und Halteelement 20 gebildete Kniehebel bis auf einen größtmöglichen Wert gestreckt werden. Wird der Hebel 40 jedoch in Richtung des Anschlags 50 bewegt, so kann das dritte Lager 60 einen vordefinierten Weg 90 parallel zur Achse 100 zurücklegen. Eine weitere Bewegung des dritten Lagers 60 ist jedoch nicht möglich, da der Anschlag 50 eine weitere Bewegung des Hebels 40 sperrt. Da jedoch das elastische Element 30 weiterhin eine Kraft auf das Halteelement 20 oder das erste Lager 91 ausübt, wirkt stets eine Kraft auf den aus Spannelement 70 und Halteelement 20 gebildeten Kniehebel ausgeübt, die versucht, den Kniehebel zu strecken. Somit bewirkt die Rückstellkraft des elastischen Elements 30, dass der Hebel 40 fest gegen den Anschlag 50 gepresst wird. Auf diese Weise setzt eine Verrastwirkung der Kniehebelverrastung 10 ein. Um diese Verrastwirkung wieder zu lösen, müsste der Hebel 40 von dem Anschlag 50 wegbewegt werden, wobei dies gegen die Rückstellkraft des elastischen Elements 30 erfolgt. Die Rückstellkraft des elastischen Elements 30 verhindert daher, dass sich die Kniehebelverrastung 10 selbständig löst.

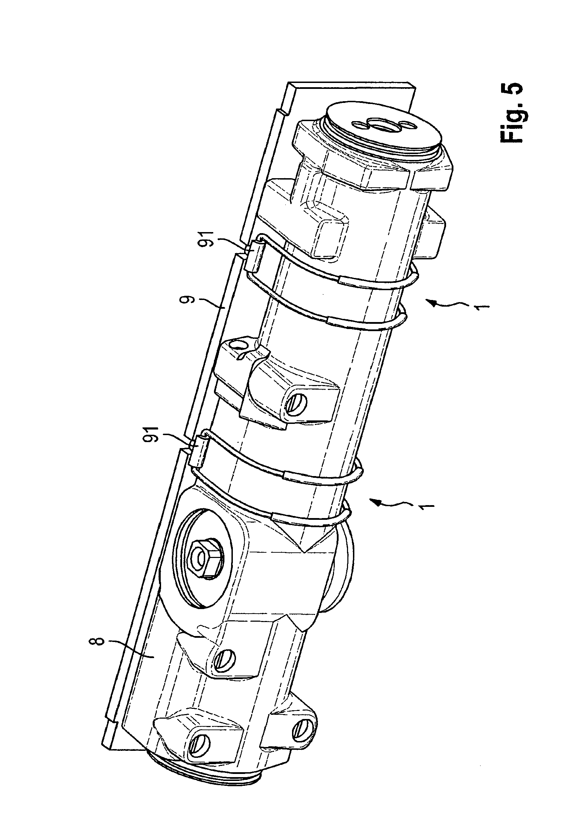

Figur 2 zeigt das in Figur 1 erläuterte Prinzip für die Befestigung einer Antriebseinheit 8 (vergleiche Figur 5) an einer Montageplatte 9 (vergleiche Figur 5). Das gezeigte Befestigungselement 1 umfasst ein Halteelement 2, das an einem ersten Lager 91 gelagert ist, wobei das Halteelement 2 von dem ersten Lager 91 insbesondere lösbar ist. Das erste Lager 91 ist translationsfest und erlaubt lediglich eine Rotation des Halteelements 2 innerhalb der Zeichenebene. Ein Spannelement 7 ist ebenfalls vorhanden, wobei das Spannelement 7 zusammen mit dem Halteelement 2 einen Kniehebel bildet. Das Spannelement 7 ist ebenso wie das Halteelement 2 lediglich durch Rotation innerhalb der Zeichenebene bewegbar, wobei ein zweites Lager 93 das Spannelement 7 lagert. Über ein drittes Lager 6 ist das Spannelement 7 mit dem Halteelement 2 verbunden, wobei das dritte Lager 6 eine Rotation des Spannelements 7 relativ zu dem Halteelement 2 ermöglicht. Um den aus Halteelement 2 und Spannelement 7 gebildeten Kniehebel zu bewegen, ist ein Hebel 4 vorhanden, dessen Bewegungsfreiheit durch einen Anschlag 5 begrenzt ist. Dieser Kniehebel weist einen Totpunkt auf, wenn das zweite Lager 93 und das dritte Lager 6 auf einer senkrechten Achse 100 liegen.

Durch den Anschlag 5 wird dem dritten Lager 6 eine Bewegung parallel zu der Achse 100 lediglich um einen vordefinierten Weg 90 erlaubt. Dieser vordefinierte Weg 90 wird auch von dem Halteelement 2 zurückgelegt. Somit kann, ausgehend vom Totpunkt des Kniehebels aus Spannelement 7 und Halteelement 2, das Halteelement 2 bei Bewegung des Hebels 4 in Richtung des Anschlags 5 lediglich der vordefinierte Weg 90 zurückgelegt werden, während bei Bewegung des Hebels 4 vom Anschlag 5 weg der zurücklegbare Weg des Halteelements 2 bis zur vollständigen Streckung des Kniehebels nicht begrenzt ist.

Die in Figur 2 gezeigte Kinematik eignet sich daher zum Einspannen von Gegenständen, insbesondere von der Antriebseinheit 8 eines Türbetätigers, da durch Bewegen des Hebels 4 von dem Anschlag 5 weg ausreichend Raum zum Anbringen der Antriebseinheit 8 besteht, während durch Bewegung des Hebels 4 zum Anschlag 5 hin ein Sperreffekt eintritt, so dass das Halteelement 2 die Antriebseinheit 8 fixiert.

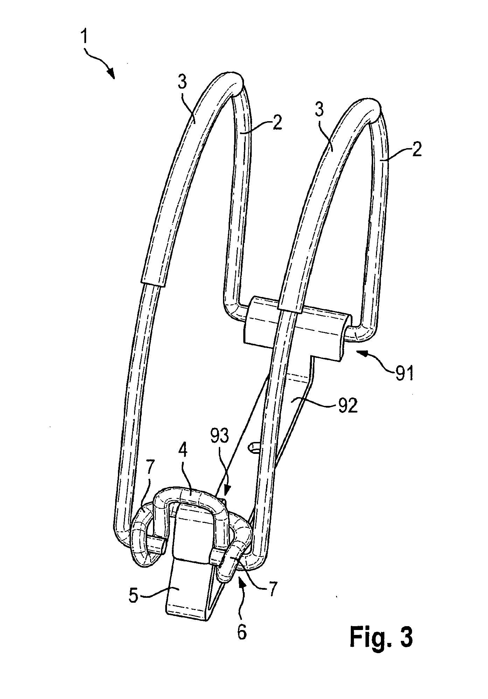

Figur 3 zeigt das erfindungsgemäße Befestigungselement 1 in einer Ausführungsform der Erfindung, wobei in dieser Ansicht der Hebel 4 von dem Anschlag 5 einen maximalen Abstand aufweist. Somit sind die Halteelemente 2 einen größtmöglichen Abstand von einem Basiselement 92 entfernt, wobei das Basiselement 92 das erste Lager 91 und das zweite Lager 93 aufnimmt. Außerdem kann in dieser Position das Halteelement 2 sehr leicht aus dem ersten Lager 91 entfernt werden, so dass das Einsetzen der Antriebseinheit 8 zwischen Basiselementen 92 und Halteelementen 2 sehr einfach ermöglicht wird.

Analog zu dem in Figur 1 gezeigten elastischen Element 30 ist in Figur 3 eine Gummihülse 3 an jedem der Halteelemente 2 vorhanden, die dieselbe Funktion aufweisen, wie das elastische Element 30 aus Figur 1. So werden die Gummihülsen 3 bei Erreichen des Totpunkts des aus Spannelement 7 und Halteelementen 2 gebildeten Kniehebels maximal kontrahiert, so dass eine Rückstellkraft entsteht, die den Kniehebel wieder zu strecken versucht. Sollte der Hebel 4 nun weiter Richtung Anschlag 5 bewegt werden, so wird durch diese Rückstellkraft der Hebel 4 an den Anschlag 5 gepresst, da eine Bewegung des Hebels 4 in Richtung des Anschlags 5 eine Streckung des Kniehebels um den vordefinierten Weg 90 (vergleiche Figur 2) zur Folge hat. Da ein weiteres Bewegen, insbesondere ein weiteres Entspannen, des Kniehebels aus Halteelementen 2 und Spannelement 7 aufgrund des gesperrten Hebels 4 nicht mehr möglich ist, verbleibt eine Spannkraft zwischen Halteelementen 2 und Basiselement 92, mit der die Antriebseinheit 8 gehalten werden kann.

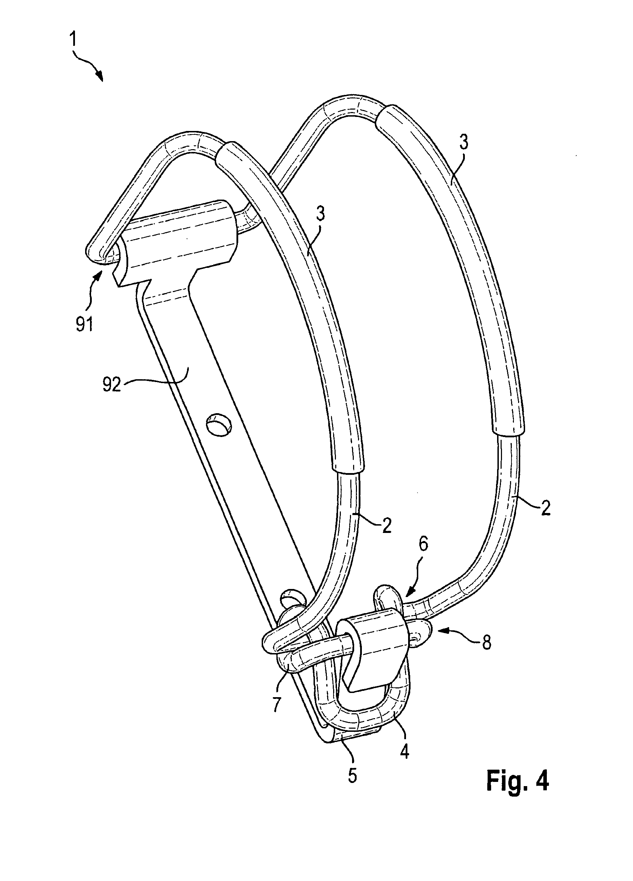

Figur 4 zeigt das Befestigungselement 1 aus Figur 3, wobei in dieser Ansicht der Hebel 4 an dem Anschlag 5 anliegt. In diesem Fall wäre die Antriebseinheit 8 zwischen Basiselement 92 und Halteelementen 2 eingespannt.

Ein erfindungsgemäßer Türbetätiger gemäß einer Ausführungsform der Erfindung wird in Figur 5 gezeigt. Dabei umfasst der Türbetätiger eine Antriebseinheit 8, die von zwei Halteelementen 1 an einer Montageplatte 9 befestigt wird. Die Basiselemente 92 der Befestigungselemente 1 können entweder einstückig mit der Montageplatte 9 ausgebildet sein, so dass die Montageplatte 9 das erste Lager 91 sowie das zweite Lager 93 der Befestigungselemente 1 aufnimmt, oder können alternativ bevorzugt auf derjenigen Seite der Montageplatte 9 verlaufen, die der Antriebseinheit 8 abgewandt ist. In letzterem Fall bleibt das Befestigungselement 1 als eigene Komponente erhalten und kann bei der Montage des Türbetätigers mit der Montageplatte 9 verbunden werden.

Wie aus Figur 4 und 5 ersichtlich ist, weisen die Halteelemente 2 der Befestigungselemente 1 eine geometrische Form auf, die weitestgehend der geometrischen Form der Antriebseinheit entspricht. Daher legen sich die Halteelemente 2 dem Erzeugen einer Einspannkraft zwischen Halteelementen und Basiselementen nahezu vollständig um die äußere Geometrie der Antriebseinheit. Auf diese Weise wird eine sichere und zuverlässige Klemmung der Antriebseinheit 8 zwischen Halteelementen 2 und Montageplatte 9 erzeugt, wobei diese Klemmung schnell und einfach wieder zu lösen ist. Daher kann der erfindungsgemäße Türbetätiger einfach, schnell und flexibel montiert oder demontiert werden.

### Bezugszeichenliste

- 1: Befestigungselement
- 2: Halteelement
- 3: Gummihülse
- 4: Hebel
- 5: Anschlag
- 6: Drittes Lage
- 7: Spannelement
- 8: Antriebseinheit
- 9: Montageplatte
- 91: Erstes Lager
- 92: Basiselement
- 93: Zweites Lager
- 100: Achse

- 10: Kniehebelverrastung
- 20: Halteelement
- 30: Elastisches Element
- 40: Hebel
- 50: Anschlag
- 60: Drittes Lager
- 70: Spannelement
- 90: Vordefinierter Weg des dritten Lagers
- 400: Bewegungsweg des Hebels

## Patentansprüche

1. Befestigungselement (1), insbesondere zum Befestigen einer Antriebseinheit (8) eines Türbetätigers an einer Montageplatte (9), umfassend ein Basiselement (92), das an der Montageplatte (9) befestigbar ist, zumindest ein Halteelement (2; 20), das an dem Basiselement (92) befestigt ist, und eine Spannvorrichtung (4, 7; 40, 70), mittels der die Antriebseinheit (8) zwischen Basiselement (92) und Halteelement (2; 20) einspannbar ist.

2. Befestigungselement (1) nach Anspruch 1, **dadurch gekennzeichnet, dass** das zumindest eine Halteelement (2; 20) über ein erstes Lager (91) an dem Basiselement (92) gelagert ist, und/oder die Spannvorrichtung (4, 7; 40, 70) über ein zweites Lager (93) an dem Basiselement (92) gelagert ist und über ein drittes Lager (6, 60) mit dem zumindest einen Halteelement (2; 20) verbunden ist.

3. Befestigungselement (1) nach einem der vorhergehenden Ansprüche, **dadurch gekennzeichnet, dass** die Spannvorrichtung (4, 7; 40, 70) einen Hebel (4; 40) und ein mit dem Hebel (4; 40) starr verbundenes Spannelement (7; 70) umfasst, wobei Spannelement (7; 70) und Haltelement (2; 20) einen Kniehebel bilden.

4. Befestigungsvorrichtung nach Anspruch 3, **dadurch gekennzeichnet, dass** das erste Lager (91) und das zweite Lager (93) translationsfest sind und das dritte Lager (6; 60) translatorisch beweglich ist, so dass Halteelement (2; 20) und Spannelement (7; 70) eine KniehebelVerrastung bilden.

5. Befestigungselement (1) nach Anspruch 3 oder 4, **dadurch gekennzeichnet, dass** das Spannelement (7; 70) über das zweite Lager (93) an dem Basiselement (92) gelagert ist und über das dritte Lager (6; 60) mit dem Halteelement (2; 20) verbunden ist und der Hebel (4; 40) eingerichtet ist, eine Bewegung des Hebels in Bewegung des dritten Lagers (6; 60) auf einer bogenförmige Kurve um das zweite Lager (93) herum umzusetzen.

6. Befestigungselement (1) nach einem der Ansprüche 3 bis 5, umfassend einen Anschlag (5) **dadurch gekennzeichnet, dass** der Anschlag (5) angeordnet ist, eine Bewegung des Hebels (4; 40) in eine vordefinierte Richtung zu blockieren.

7. Befestigungselement (1) nach einem der vorhergehenden Ansprüche, **gekennzeichnet durch** ein elastisches Element (3; 30), das insbesondere zwischen Antriebseinheit (8) und Halteelement (2; 20) anordenbar ist, wobei die Spannvorrichtung (4, 7; 40, 70) eingerichtet ist, das elastische Element (3; 30) **durch** Aufbringen einer Kraft von dem Halteelement (2; 20) auf die Antriebseinheit (8), bevorzugt elastisch, zu verformen.

8. Befestigungselement (1) nach Anspruch 7, **dadurch gekennzeichnet, dass** durch die Bewegung des dritten Lagers (6; 60) das elastische Element (3; 30) gegen die Antriebseinheit (8) anpressbar ist, wobei die bogenförmige Kurve einen Totpunkt aufweist, an dem das elastische Element (3; 30) durch die Anpressung an die Antriebseinheit (8) eine maximale Verformung aufweist.

9. Befestigungselement (1) nach einem der Ansprüche 7 bis 8, **dadurch gekennzeichnet, dass** das elastische Element eine Gummihülse ist, die um das Halteelement (2; 20) gelegt ist.

10. Türbetätiger, umfassend eine Antriebseinheit (8), eine Montageplatte (9) und ein Befestigungselement (1) nach einem der vorhergehenden Ansprüche, wobei das Befestigungselement (1) die Antriebseinheit an der Montageplatte (9) befestigt.

11. Türbetätiger nach Anspruch 9, **dadurch gekennzeichnet, dass** das Basiselement (92) einstückig mit der Montageplatte (9) ausgebildet ist.
